# EUROPÄISCHE PATENTANMELDUNG

(11) **EP 2 546 314 A1**
(43) Veröffentlichungstag der Anmeldung: **16.01.2013**
(21) Anmeldenummer: 11173608.8
(22) Anmeldetag: 12.07.2011
(51) Int. Cl.: C09J 5/02, C08J 5/12

(54) **Verfahren zur Vorbehandlung von Formstücken aus Kunststoffmatrix-enthaltenden Faserstoff-Zusammensetzungen zum Verkleben**

(71) Anmelder: Sika Technology AG, 6340 Baar (CH)
(72) Erfinder: Linnenbrink, Martin, 21641 Apensen (DE); Roock, Wolfgang, 25482 Appen (DE); Ittrich, Florian, 25421 Pinneberg (DE)
(74) Vertreter: Sika Patent Attorneys

(57) **Zusammenfassung**

Die Erfindung betrifft ein Verfahren zum Verkleben von Formstücken aus Kunststoffmatrix-enthaltenden Faserstoff-Zusammensetzungen KFZ mit Polyurethanzusammensetzungen aufweisend die Schritte:

a) Applizieren von IR-Strahlung auf einen definierten Bereich eines Formstücks aus KFZ;
b) Applizieren einer Polyurethanzusammensetzung auf den definierten Bereich des Formstücks;
c) Fügen der Polyurethanzusammensetzung auf dem definierten Bereich des Formstücks mit einem Substrat.
d) Aushärten der Polyurethanzusammensetzung.

Das erfindungsgemässe Verfahren zeichnet sich durch einen raschen Festigkeitsaufbau (Frühfestigkeit) der Polyurethanzusammensetzung aus, dadurch kann der unter ihrer Verwendung erzeugte Verbund schon kurze Zeit nach der Applikation der Polyurethanzusammensetzung und dem Fügen des Formstücks mit dem Substrat bearbeitet oder belastet werden.

## Beschreibung

### Technisches Gebiet

Die vorliegende Erfindung betrifft das Gebiet der Vorbehandlung von Kunststoffmatrix-enthaltenden Faserwerkstoff-Zusammensetzungen zum Verkleben, insbesondere im Fahrzeugbau.

### Stand der Technik

Die Verwendung von Vorbehandlungsmethoden wie Primern oder physikochemische Verfahren wie Plasmavorbehandlungen zur Verbesserung von Haftung von Klebstoffen und Dichtstoffen ist schon lange bekannt. Es hat sich gezeigt, dass die Haftung von Klebstoffen und Dichtstoffen auf einigen Untergründen sehr schwierig zu erreichen ist.

Kunststoffmatrix-enthaltende Faserwerkstoff-Zusammensetzungen sind ein derartiger Untergrund, welcher bekanntermassen schwierig zu verkleben ist. Speziell schwierig ist in diesem Fall das Erreichen einer Frühfestigkeit bei der Verwendung mittels Polyurethanklebstoffen.

### Darstellung der Erfindung

Aufgabe der vorliegenden Erfindung ist es daher, ein Vorbehandlungsverfahren zur Verfügung zu stellen, welches die Haftung von Polyurethanklebstoffen auf Kunststoffmatrix-enthaltenden Faserwerkstoff-Zusammensetzungen verbessert.

Überraschenderweise wurde gefunden, dass ein Verfahren gemäss Anspruch 1 dieses Problem löst.

Kern der Erfindung ist ein Verfahren zum Verkleben von Formstücken aus Kunststoffmatrix-enthaltenden Faserstoff-Zusammensetzungen **KFZ** mit Polyurethanzusammensetzungen **P**, aufweisend die Schritte:
a) Applizieren von IR-Strahlung auf einen definierten Bereich **DB** des Formstücks aus **KFZ**;
b) Applizieren einer Polyurethanzusammensetzung **P** auf den definierten Bereich **DB** des Formstücks aus **KFZ**;
c) Fügen der Polyurethanzusammensetzung **P** auf dem definierten Bereich **DB** des Formstücks aus **KFZ** mit einem Substrat.
d) Aushärten der Polyurethanzusammensetzung **P.**

Das erfindungsgemässe Verfahren zeichnet sich durch einen raschen Festigkeitsaufbau (Frühfestigkeit) der Polyurethanzusammensetzung **P** aus, dadurch kann der unter ihrer Verwendung erzeugte Verbund schon kurze Zeit nach der Applikation der Polyurethanzusammensetzung **P** und dem Fügen des Formstücks mit dem Substrat bearbeitet oder belastet werden, beispielsweise durch Begehen, durch Abschleifen, durch Transport oder durch die Entfernung von fixierenden Halterungen. Nach der Aushärtung verfügt der Verbund weiter über eine hohe Festigkeit.

Weitere Aspekte der Erfindung sind Gegenstand weiterer unabhängiger Ansprüche. Besonders bevorzugte Ausführungsformen der Erfindung sind Gegenstand der abhängigen Ansprüche.

### Wege zur Ausführung der Erfindung

Die vorliegende Erfindung betrifft ein Verfahren zum Verkleben von Formstücken aus Kunststoffmatrix-enthaltenden Faserstoff-Zusammensetzungen **KFZ** mit Polyurethanzusammensetzungen **P**, aufweisend die Schritte:
a) Applizieren von IR-Strahlung auf einen definierten Bereich **DB** des Formstücks aus **KFZ**;
b) Applizieren einer Polyurethanzusammensetzung **P** auf den definierten Bereich **DB** des Formstücks aus **KFZ**;
c) Fügen der Polyurethanzusammensetzung **P** auf den definierten Bereich **DB** des Formstücks aus **KFZ** mit einem Substrat.
d) Aushärten der Polyurethanzusammensetzung **P**.

Bei der Polyurethanzusammensetzung **P** handelt es vorzugsweise um ein Einkomponentensystem oder ein Zweikomponentensystem.

Unter "Einkomponentensystem" wird in diesem Zusammenhang ein System verstanden, bei welchem typischerweise eine Verbindung aus einem Gebinde durch ein Dosierwerkzeug abgegeben wird und bei welchem die Verbindung ihre Funktion ohne Zugabe einer weiteren Verbindung aus einem Behältnis, beispielsweise einer Nebenkomponente, durch das Dosierwerkzeug erfüllen kann.

Unter "Zweikomponentensystem" wird in diesem Zusammenhang ein System verstanden, welches typischerweise aus einer Hauptkomponente und einer Nebenkomponente besteht. Natürlichen können die Haupt-, respektive die Nebenkomponente, jeweils mehrere unterschiedliche chemische Verbindungen enthalten. Die Nebenkomponente ist typischerweise eine Verbindung, welche mit der Hauptkomponente reagieren und zur Polymerisation der Hauptkomponente, beispielsweise durch Initiation oder Beschleunigung, und zur finalen Härtung der Hauptkomponente führen kann. Unter "Polymerisation" wird in diesem Dokument die irgendwie geartete Überführung von niedermolekularen Verbindungen (Monomeren, Oligomeren, Prepolymeren) in hochmolekulare Verbindungen (Polymere, Makromoleküle, Polymerisate) verstanden und umfasst Polyaddition und Polykondensation. Daher werden die Hauptkomponente und die Nebenkomponente in voneinander getrennten Behältnissen aufbewahrt, um eine spontane Reaktion der Hauptkomponente mit der Nebenkomponente zu verhindern. Bevorzugt ist die Hauptkomponente ein Klebstoff und die Nebenkomponente ein Aushärtungsbeschleuniger.

In einer Ausführungsform ist die Polyurethanzusammensetzung **P** ein Einkomponentensystem enthaltend ein Polyurethanpolymer **P1**, wobei das Polyurethanpolymer **P1** erhältlich ist durch die Umsetzung von mindestens einem Polyol mit mindestens einem Polyisocyanat.

Diese Umsetzung kann dadurch erfolgen, dass das Polyol und das Polyisocyanat mit üblichen Verfahren, beispielsweise bei Temperaturen von 50 °C bis 100 °C, gegebenenfalls unter Mitverwendung geeigneter Katalysatoren, zur Reaktion gebracht werden, wobei das Polyisocyanat so dosiert ist, dass dessen Isocyanatgruppen im Verhältnis zu den Hydroxylgruppen des Polyols im stöchiometrischen Überschuss vorhanden sind. Vorteilhaft ist das Polyisocyanat so dosiert, dass ein NCO/OH-Verhältnis von ≤ 2.5, bevorzugt ≤ 2.2, eingehalten wird. Unter dem NCO/OH-Verhältnis wird hierbei das Verhältnis der Anzahl der eingesetzten Isocyanatgruppen zu der Anzahl der eingesetzten Hydroxylgruppen verstanden. Bevorzugt verbleibt nach der Umsetzung der Hydroxylgruppen des Polyols ein Gehalt an Isocyanatgruppen von 0.8 bis 2.2 Gewichts-%, bezogen auf das Gesamtgewicht des Polyurethanpolymers **P1**.

Als Polyisocyanate für die Herstellung des Polyurethanpolymers **P1** können die folgenden handelsüblichen Polyisocyanate oder Mischungen davon verwendet werden:

1,6-Hexamethylendiisocyanat (HDI), 2-Methylpentamethylen-1,5-diisocyanat, 2,2,4- und 2,4,4-Trimethyl-1,6-hexamethylendiisocyanat (TMDI), 1,12-Dodecamethylendiisocyanat, Lysin- und Lysinesterdiisocyanat, Cyclohexan-1,3- und Cyclohexan-1,4-diisocyanat und beliebige Gemische dieser Isomeren, 1-Isocyanato-3,3,5-trimethyl-5-isocyanatomethyl-cyclohexan (=Isophorondiisocyanat oder IPDI), Perhydro-2,4'- und Perhydro-4,4'-diphenylmethandiisocyanat (HMDI), 1,4-Diisocyanato-2,2,6-trimethylcyclohexan (TMCDI), 1,3- und 1,4-Bis-(isocyanatomethyl)-cyclohexan, m- und p-Xylylendiisocyanat (m- und p-XDI), m- und p-Tetramethyl-1,3- und p-Tetramethyl-1,4-xylylendiisocyanat (mund p-TMXDI), Bis-(1-Isocyanato-1-methylethyl)-naphthalin, 2,4- und 2,6-Toluylendiisocyanat und beliebige Gemische dieser Isomeren (TDI), 4,4'-, 2,4'-und 2,2'-Diphenylmethandiisocyanat und beliebige Gemische dieser Isomeren (MDI), 1,3- und 1,4-Phenylendiisocyanat, 2,3,5,6-Tetramethyl-1,4-diisocyanatobenzol, Naphthalin-1,5-diisocyanat (NDI), 3,3'-Dimethyl-4,4'-diisocyanatodiphenyl (TODI), Oligomere und Polymere der vorgenannten Isocyanate, sowie beliebige Mischungen der vorgenannten Isocyanate. Bevorzugt sind MDI, TDI, HDI und IPDI.

Geeignete Polyole für die Herstellung des Polyurethanpolymers **P1** sind insbesondere Polyetherpolyole, Polyesterpolyole und Polycarbonatpolyole sowie Mischungen dieser Polyole.

Als Polyetherpolyole, auch Polyoxyalkylenpolyole oder Oligoetherole genannt, sind insbesondere jene geeignet, welche Polymerisationsprodukte von Ethylenoxid, 1,2-Propylenoxid, 1,2- oder 2,3-Butylenoxid, Oxetan, Tetrahydrofuran oder Mischungen davon sind, gegebenenfalls polymerisiert mit Hilfe eines Startermoleküls mit zwei oder mehreren aktiven Wasserstoffatomen wie beispielsweise Wasser, Ammoniak oder Verbindungen mit mehreren OH- oder NH-Gruppen wie beispielsweise 1,2-Ethandiol, 1,2- und 1,3-Propandiol, Neopentylglykol, Diethylenglykol, Triethylenglykol, die isomeren Dipropylenglykole und Tripropylenglykole, die isomeren Butandiole, Pentandiole, Hexandiole, Heptandiole, Octandiole, Nonandiole, Decandiole, Undecandiole, 1,3- und 1,4-Cyclohexandimethanol, Bisphenol A, hydriertes Bisphenol A, 1,1,1-Trimethylolethan, 1,1,1-Trimethylolpropan, Glycerin, Anilin, sowie Mischungen der genannten Verbindungen. Eingesetzt werden können sowohl Polyoxyalkylenpolyole, die einen niedrigen Ungesättigtheitsgrad aufweisen (gemessen nach ASTM D-2849-69 und angegeben in Milliäquivalent Ungesättigtheit pro Gramm Polyol (mEq/g)), hergestellt beispielsweise mit Hilfe von so genannten Double Metal Cyanide Komplex-Katalysatoren (DMC-Katalysatoren), als auch Polyoxyalkylenpolyole mit einem höheren Ungesättigtheitsgrad, hergestellt beispielsweise mit Hilfe von anionischen Katalysatoren wie NaOH, KOH, CsOH oder Alkalialkoholaten.

Besonders geeignet sind Polyoxyethylenpolyole und Polyoxypropylenpolyole, insbesondere Polyoxyethylendiole, Polyoxypropylendiole, Polyoxyethylentriole und Polyoxypropylentriole.

Insbesondere geeignet sind Polyoxyalkylendiole oder Polyoxyalkylentriole mit einem Ungesättigtheitsgrad tiefer als 0.02 mEq/g und mit einem Molekulargewicht im Bereich von 1'000 bis 30'000 g/mol, sowie Polyoxyethylendiole, Polyoxyethylentriole, Polyoxypropylendiole und Polyoxypropylentriole mit einem Molekulargewicht von 400 bis 20'000 g/mol.

Ebenfalls besonders geeignet sind so genannte Ethylenoxidterminierte ("EO-endcapped", ethylene oxide-endcapped) Polyoxypropylenpolyole. Letztere sind spezielle Polyoxypropylenpolyoxyethylenpolyole, die beispielsweise dadurch erhalten werden, dass reine Polyoxypropylenpolyole, insbesondere Polyoxypropylendiole und -triole, nach Abschluss der Polypropoxylierungsreaktion mit Ethylenoxid weiter alkoxyliert werden und dadurch primäre Hydroxylgruppen aufweisen. Bevorzugt sind in diesem Fall Polyoxypropylenpolyoxyethylendiole und Polyoxypropylenpolyoxyethylentriole.

Weiterhin geeignet sind Styrol-Acrylnitril gepfropfte Polyetherpolyole, wie sie beispielsweise unter dem Handelsnamen Lupranol^{®} kommerziell erhältlich sind von der Firma Elastogran GmbH, Deutschland.

Als Polyesterpolyole sind insbesondere Polyester geeignet, welche mindestens zwei Hydroxylgruppen tragen und nach bekannten Verfahren, insbesondere der Polykondensation von Hydroxycarbonsäuren oder der Polykondensation von aliphatischen und/oder aromatischen Polycarbonsäuren mit zwei- oder mehrwertigen Alkoholen, hergestellt werden.

Insbesondere geeignet sind Polyesterpolyole, welche hergestellt sind aus zwei- bis dreiwertigen Alkoholen wie beispielsweise 1,2-Ethandiol, Diethylenglykol, 1,2-Propandiol, Dipropylenglykol, 1,4-Butandiol, 1,5-Pentandiol, 1,6-Hexandiol, Neopentylglykol, Glycerin, 1,1,1-Trimethylolpropan oder Mischungen der vorgenannten Alkohole mit organischen Dicarbonsäuren oder deren Anhydriden oder Estern wie beispielsweise Bernsteinsäure, Glutarsäure, Adipinsäure, Trimethyladipinsäure, Korksäure, Azelainsäure, Sebacinsäure, Dodecandicarbonsäure, Maleinsäure, Fumarsäure, Dimerfettsäure, Phthalsäure, Phthalsäureanhydrid, Isophthalsäure, Terephthalsäure, Dimethylterephthalat, Hexahydrophthalsäure, Trimellithsäure und Trimellithsäureanhydrid oder Mischungen der vorgenannten Säuren, sowie Polyesterpolyole aus Lactonen wie beispielsweise ε-Caprolacton.

Besonders geeignet sind Polyesterdiole, insbesondere solche, die hergestellt sind aus Adipinsäure, Azelainsäure, Sebacinsäure, Dodecandicarbonsäure, Dimerfettsäure, Phthalsäure, Isophthalsäure und Terephthalsäure als Dicarbonsäure oder aus Lactonen wie beispielsweise ε-Caprolacton und aus Ethylenglykol, Diethylenglykol, Neopentylglykol, 1,4-Butandiol, 1,6-Hexandiol, Dimerfettsäurediol und 1,4-Cyclohexandimethanol als zweiwertigem Alkohol.

Als Polycarbonatpolyole sind insbesondere jene geeignet, wie sie durch Umsetzung beispielsweise der oben genannten, zum Aufbau der Polyesterpolyole eingesetzten, Alkohole mit Dialkylcarbonaten wie Dimethylcarbonat, Diarylcarbonaten wie Diphenylcarbonat oder Phosgen zugänglich sind. Besonders geeignet sind Polycarbonatdiole, insbesondere amorphe Polycarbonatdiole.

Weitere geeignete Polyole sind Poly(meth)acrylatpolyole.

Diese genannten Polyole weisen bevorzugt ein mittleres Molekulargewicht von 250 bis 30'000 g/mol, insbesondere von 1'000 bis 30'000 g/mol, und eine mittlere OH-Funktionalität im Bereich von 1.6 bis 3 auf.

Besonders geeignete Polyole sind Polyesterpolyole und Polyetherpolyole, insbesondere Polyoxyethylenpolyol, Polyoxypropylenpolyol und Polyoxypropylenpolyoxyethylenpolyol, bevorzugt Polyoxyethylendiol, Polyoxypropylendiol, Polyoxyethylentriol, Polyoxypropylentriol, Polyoxypropylenpolyoxyethylendiol und Polyoxypropylenpolyoxyethylentriol.

Handelt es sich bei der Polyurethanzusammensetzung **P** um ein Einkomponentensystem enthaltend ein Polyurethanpolymer **P1**, kann die Polyurethanzusammensetzung **P** neben den bereits erwähnten weitere Bestandteile, wie sie der Fachmann aus der Einkomponenten-Polyurethanchemie her kennt, aufweisen. Als derartig zusätzliche Bestandteile werden beispielsweise Lösungsmittel, Weichmacher und/oder Extender Füllstoffe, wie Russe, Kreiden oder Talke, Haftvermittler, insbesondere Trialkoxysilane, sowie Thixotropiermittel, wie amorphe Kieselsäuren, Zeolithe eingesetzt.

In einer weiteren und bevorzugten Ausführungsform ist die Polyurethanzusammensetzung **P** eine zweikomponentige Polyurethanzusammensetzung **P2**, bestehend aus einer Polyolkomponente **K1** und einer Polyisocyanatkomponente **K2**.

Die Polyolkomponente **K1** umfasst hierbei mindestens ein Polyol, wie sie als geeignete Polyole für die Herstellung des Polyurethanpolymers **P1** vorgehend beschreiben sind, insbesondere Polyetherpolyole, Polyesterpolyole und Polycarbonatpolyole sowie Mischungen dieser Polyole.

Weiterhin kann die Polyolkomponente **K1** noch andere Bestandteile umfassen. Vorteilhaft werden Aushärtungskatalysatoren eingesetzt. Derartige Katalysatoren sind dem Fachmann für die Reaktion von Polyisocyanaten mit Polyolen, gegebenenfalls auch für mit Polyaminen oder Wasser, bekannt. Als Beispiele für derartige Katalysatoren seien Zinn-, Zink- und Wismut-organische Metallkatalysatoren, z.B. Dibutylzinndilaurat, oder tertiäre Amine, z.B. 1,4-Diazobicyclo[2.2.2]octan (DABCO), erwähnt.

Als zusätzliche Bestandteile können weiterhin Diole, insbesondere Polyoxyalkylendiolen, und/oder Diamine sein. Als Amine sind insbesondere aliphatische, araliphatische, cycloaliphatische sowie toxikologisch unbedenkliche aromatische Amine geeignet. Durch die Auswahl und Konzentration von geeigneten Aminen sowie Katalysatoren kann die Topfzeit und das Härtungsverhalten sowie das Abrutschverhalten vorteilhaft beeinflusst werden.

Die Polyisocyanatkomponente **K2** umfasst mindestens ein Polyisocyanat **B1**.

Als Polyisocyanat **B1** besonders geeignet sind einerseits Polyisocyanate **B1**', wie sie vorgehend als geeignete Polyisocyanate für die Herstellung des Polyurethanpolymers **P1** beschrieben wurden.

Andererseits als Polyisocyanat **B1** besonders geeignet haben sich Polyurethanprepolymere **B1**", welche mindestens zwei Isocyanat-Gruppen aufweisen, und welche aus einer Reaktion von mindestens einem Polyisocyanat mit einem Molekulargewicht von kleiner als 300 g/Mol, insbesondere von zwischen 150 g/Mol und 270 g/Mol, mit mindestens einem Polyol **AB1** gebildet werden. Als Polyol **AB1** sind insbesondere Polyole geeignet, welche ausgewählt sind aus der Gruppe umfassend Polyetherpolyole, Polyesterpolyole, Polycarbonatpolyole, Polyole gebildet aus ungesättigten Monomeren und deren Mischungen.

Vorzugsweise handelt es sich bei diesen Polyolen um Polyole, wie sie als geeignete Polyole für die Herstellung des Polyurethanpolymers **P1** vorgehend beschreiben sind, insbesondere Polyetherpolyole, Polyesterpolyole und Polycarbonatpolyole sowie Mischungen dieser Polyole.

Die Herstellungsweise derartiger Isocyanat-Gruppen aufweisender Polyurethanprepolymer erfolgt in bekannter Art und Weise und erfolgt typischerweise im stöchiometrischen Überschuss des Polyisocyanates gegenüber des Polyols. Als hierfür eingesetzte Polyisocyanate sind insbesondere 2,4- und 2,6-Toluylendiisocyanat (TDI), 2,4'- und 4,4'-Diphenylmethandiisocyanat (MDI), 1,6-Hexamethylendiisocyanat (HDI) sowie deren Isomerengemische und Mischungen untereinander. Besonders bevorzugt gilt MDI.

Diese genannten Polyole **AB1** weisen bevorzugt ein mittleres Molekulargewicht von 250 bis 30'000 g/mol, insbesondere von 1'000 bis 8'000 g/mol, und sind bevorzugt Diole oder Triole, insbesondere mit einer mittleren OH-Funktionalität im Bereich von 1.6 bis 3.

In einer bevorzugten Ausführungsform wird eine Mischung von Polyolen **AB1** eingesetzt, die eine Mischung von Diolen und Triolen ist.

In einer bevorzugten Ausführungsform umfasst die Polyisocyanatkomponente **K2** mindestens ein Polyisocyanat **B1**' und mindestens ein Polyisocyanat Polyurethanprepolymer **B1**".

Beide Komponenten **K1** und **K2** können neben den bereits erwähnten weitere Bestandteile, wie sie der Fachmann aus der Zweikomponenten-Polyurethanchemie her kennt, aufweisen. Diese können in nur einer Komponente oder in beiden vorhanden sein. Als derartig zusätzliche Bestandteile werden beispielsweise Lösungsmittel, Weichmacher und/oder Extender Füllstoffe, wie Russe, Kreiden oder Talke, Haftvermittler, insbesondere Trialkoxysilane, sowie Thixotropiermittel, wie amorphe Kieselsäuren, Zeolithe eingesetzt.

Wie der Fachmann für Polyurethanklebstoffe weiss, muss bei der Herstellung der Komponenten, insbesondere bei der Polyisocyanatkomponente **K2**, darauf geachtet werden, dass die Rohstoffe möglichst frei sind von Wasser sind und dass während und nach deren Herstellung möglichst keine Feuchtigkeit in Kontakt mit der Komponente treten kann. Dies wird einerseits durch ein physikalisches oder chemisches Trocknen der Ausgangssubstanzen sowie durch das Arbeiten unter Inertgas, üblicherweise Stickstoff, erreicht.

Die Komponenten **K1** und **K2** werden vorteilhaft derart formuliert, dass das Volumenverhältnis von Komponente **K1** und **K2** zwischen 1:3 und 3:1, insbesondere zwischen 1:2 und 2:1, beträgt. Besonders bevorzugt beträgt dieses Verhältnis in etwa 1:1. Das Mischverhältnis ist vorzugsweise derart, dass die NCO-Gruppen der Komponente **K2** stöchiometrisch zu den NCOreaktiven Gruppen, typischerweise OH-Gruppen, der Komponente **K1** erfolgt. Erfolgt die Mischung nicht im wesentlichen stöchiometrisch, d.h. mit Abweichungen von mehr als 5%, erfolgt die Reaktion der Komponenten **K1** und **K2** nicht optimal, was zu einer Reduktion in den mechanischen Eigenschaften der ausgehärteten Polyurethanzusammensetzung führt. Dies trifft vor allem für einen Überschuss der Polyolkomponente zu. Bei einem Überschuss von Polyisocyanat ist dies zwar grundsätzlich ebenfalls nachteilig, aber durch die nachträgliche Reaktion der nicht umgesetzten Isocyanat-Gruppen mit Feuchtigkeit, beispielsweise von der Luftfeuchtigkeit herrührend, welche gegebenenfalls zu weiteren Vernetzungen führen kann, kann die verschlechterte Mechanik zumindest teilweise geheilt werden.

Die Komponenten **K1** und **K2** werden vor der Anwendung getrennt von einander gelagert und erst bei oder unmittelbar vor der Anwendung miteinander gemischt. Die Komponenten sind vorteilhaft in einer Verpackung, welche aus zwei von einander getrennten Kammern besteht, vorhanden und zwar derart, dass die Polyolkomponente **K1** in der einen Kammer und die Polyisocyanatkomponente **K2** in der anderen Kammer vorhanden ist. Die Komponenten **K1** und **K2** werden in die Kammern der Verpackung eingefüllt und luft- und feuchtigkeitsdicht verschlossen.

Vorzugsweise weist die Polyurethanzusammensetzung **P** weiterhin mindestens einen Füllstoff auf, wobei der Anteil an Füllstoff 20 bis 60 Gew.-%, insbesondere 30 bis 60 Gew.-%, bezogen auf das Gesamtgewicht der Zusammensetzung, beträgt. Es ist durchaus möglich und kann sogar von Vorteil sein, eine Mischung verschiedener Füllstoffe einzusetzen.

Der Füllstoff beeinflusst sowohl die rheologischen Eigenschaften der nicht ausgehärteten Zusammensetzung als auch die mechanischen Eigenschaften der ausgehärteten Zusammensetzung. Geeignete Füllstoffe sind anorganische und organische Füllstoffe, zum Beispiel natürliche, gemahlene oder gefällte Calciumcarbonate, welche gegebenenfalls mit Fettsäuren, insbesondere Stearaten, beschichtet sind, Bariumsulfat (BaSO₄, auch Baryt oder Schwerspat genannt), calcinierte Kaoline, Aluminiumoxide, Aluminiumhydroxide, Kieselsäuren, insbesondere hochdisperse Kieselsäuren aus Pyrolyseprozessen, Russe, insbesondere industriell hergestellter Russ (Carbon Black; im Folgenden als "Russ" bezeichnet), PVC-Pulver oder Hohlkugeln. Bevorzugte Füllstoffe sind Calciumcarbonate, calcinierte Kaoline, Russ, hochdisperse Kieselsäuren sowie flammhemmende Füllstoffe, wie Hydroxide oder Hydrate, insbesondere Hydroxide oder Hydrate von Aluminium, bevorzugt Aluminiumhydroxid.

Bei den Kunststoffmatrix-enthaltenden Faserwerkstoff-Zusammensetzungen **KFZ** handelt es sich um Faserwerkstoff-Zusammensetzungen, welche eine Kunststoffmatrix enthalten.

Geeignete Fasern solcher Faserwerkstoff-Zusammensetzungen sind Fasern ausgewählt aus der Liste bestehend aus anorganische Fasern, insbesondere Glasfasern und mineralische Fasern; metallische Fasern und organischen Fasern. Vorzugsweise handelt es sich um organische Fasern ausgewählt aus der Liste bestehend aus Aramidfasern, Polyesterfasern, Nylonfasern, Plexiglasfasern, Fasern aus einem Homo- oder Copolymeren von Ethylen und/oder Propylen und Kohlenstofffasern. Am meisten bevorzugt handelt es sich um Kohlenstofffasern.

Unter dem Begriff "Kohlenstofffasern" (auch Kohlefasern oder Carbonfasern genannt) werden im vorliegenden Dokument industriell hergestellte Fasern aus kohlenstoffhaltigen Ausgangsmaterialien verstanden, die durch Pyrolyse in graphitartig angeordneten Kohlenstoff umgewandelt werden. Sie werden im vorliegenden Dokument zu den organischen Fasern gezählt.

Unter Faserwerkstoff ist im ganzen vorliegenden Dokument ein Werkstoff zu verstehen, welcher aus Fasern aufgebaut ist. Die Fasern können hierbei Kurzfasern oder Langfasern, gesponnene, gewebte oder ungewebte Fasern oder Filamente sein. Weiterhin können die Fasern gerichtete oder gestreckte Fasern sein. Weiterhin kann es vorteilhaft sein, unterschiedliche Fasern, sowohl in Geometrie als auch Zusammensetzung, miteinander zu verwenden.

Weiterhin umfasst der Faserwerkstoff Zwischenräume. Diese Zwischenräume werden durch geeignete Herstellverfahren aufgebaut. Vorzugsweise sind die Zwischenräume zumindest teilweise offen und erlauben das Eindringen der Kunststoffmatrix. Der aus Fasern aufgebaute Körper kann auf die verschiedensten dem Fachmann bekannten Verfahren hergestellt werden. Insbesondere kommen Körper zum Einsatz, die ein Gewebe, Gelege oder Gewirke sind. Bevorzugt handelt es sich bei dem Faserstoff um ein Gewebe oder ein Gelege, insbesondere ein Multiaxialgelege.

Geeignete Kunststoffmatrices sind ausgewählt aus der Liste bestehend aus Epoxidharz, ungesättigtem Polyesterharz, Vinylesterharz, Phenol-Formaldehydharz, Diallylphthalatharz, (Meth-)acrylatharz, Polyurethan, Aminoharz, Melaminharz und Harnstoffharz. Insbesondere bevorzugt als Kunststoffmatrix ist Epoxidharz. Es ist daher vorteilhaft, wenn es sich bei der Kunststoffmatrix-enthaltenden Faserstoff-Zusammensetzung **KFZ** um eine Kunststoffmatrix umfassend mindestens ein Epoxidharz handelt.

Formstücke aus Kunststoffmatrix-enthaltenden Faserwerkstoff-Zusammensetzungen **KFZ** werden beispielsweise hergestellt, indem Bahnen von Faserwerkstoff auf eine Pressformhohlraumfläche geschichtet werden, die die Form des gewünschten Formkörpers definiert. Die geschichteten Bahnen aus Faserwerkstoff werden mit nicht ausgehärtetem, flüssigem Kunststoffmaterial durchtränkt und imprägniert.

Die Flüssigkeit ist nicht ausgehärtetes Vorläufermaterial für das Kunststoffmaterial, das eine feste Matrix um die Fasern des Faserwerkstoffs bilden wird. Die Imprägnierung mit dem flüssigen Kunststoffmaterial kann bewerkstelligt werden, bevor oder nachdem die geschichteten Bahnen in der Pressform angeordnet sind. Dort werden die Schichten zu einer gewünschten Form verdichtet und das flüssige Kunststoffmaterial wird erwärmt und zu einer festen Matrix ausgehärtet. Die ausgehärteten Produkte, d.h. die Formkörper aus Kunststoffmatrix-enthaltenden Faserwerkstoff-Zusammensetzungen **KFZ** sind vorzugsweise leichtgewichtig und sehr fest.

Bevorzugte Kunststoffmatrix-enthaltenden Faserwerkstoff-Zusammensetzungen **KFZ** werden auf Basis Glasfasern und/oder Kohlefasern in einer Polyester- oder Epoxidmatrix hergestellt. Derartige Zusammensetzungen können durch verschiedene Prozesse in bekannter Art und Weise aus einem Polyester- oder Polyepoxid sowie Glasfasern und/oder Kohlefasern hergestellt werden.

Besonders bevorzugt handelt es sich bei der Kunststoffmatrix-enthaltenden Faserstoff-Zusammensetzungen **KFZ** um ein Material, dessen Kunststoffmatrix Epoxidharz enthält und dessen Faserwerkstoff Kohlenstofffasern aufweist.

Bei dem erfindungsgemässen Verfahren wird in Schritt a) IR-Strahlung auf einen definierten Bereich **DB** des Formstücks aus **KFZ** appliziert. Unter dem Begriff "Formstück" wird ein Gegenstand mit einer dreidimensionalen Ausdehnung bezeichnet. Vorzugsweise handelt es sich um Formstücke mit eher flächiger Ausformung, beispielsweise Teile der Verschalung von Fahrzeugen. Vorzugsweise handelt es sich um Formteile, wie sie beispielsweise im Fahrzeugbau, Flugzeugbau, im Bootsbau oder bei anderen mechanisch hoch belasteten Bauteilen eingesetzt werden.

Die Schritte im erfindungsgemässen Verfahren finden in der folgenden zeitlichen Abfolge statt; Schritt a) findet vor Schritt b) statt.

Das Applizieren der IR-Strahlung auf einen definierten Bereich **DB** des Formstücks aus **KFZ** in Schritt a) führt zu einer Erwärmung des definierten Bereichs **DB.**

Es ist vorteilhaft für die Haftung der Polyurethanzusammensetzungen **P** auf dem Formstück, wenn die Oberflächentemperatur des definierten Bereichs **DB** des Formstücks aus **KFZ** in Schritt a) für ≥ 5 sec, vorzugsweise 5-600 sec, insbesondere bevorzugt für 30-180 sec, auf eine Temperatur von ≥ 60 C°, vorzugsweise von 60 - 200 C°, insbesondere bevorzugt von 120-160 C°, gebracht wird.

Überraschenderweise wurde gefunden, dass sich die Haftung der Polyurethanzusammensetzung **P** weiter verbessert, wenn in Schritt a) das Applizieren von IR-Strahlung auf der abgewandten Oberfläche des definierten Bereichs **DB** ausgeführt wird, auf der in Schritt b) die Polyurethanzusammensetzung **P** appliziert wird. Handelt es sich also bei dem Formstück um ein Formstück mit eher flächiger Ausformung, so kann es für die Verbesserung der Haftung der Polyurethanzusammensetzung **P** auf dem Formstück vorteilhaft sein, wenn in Schritt a) die Applikation der IR-Strahlung auf der einen Seite des definierten Bereichs **DB** des Formstücks aus **KFZ** ausgeführt wird und in Schritt b) die Polyurethanzusammensetzung **P** auf der anderen Seite des definierten Bereichs **DB**, also der abgewandten Seite, appliziert wird.

Bei der IR-Strahlung in Schritt a) handelt es sich vorzugsweise um IR-Strahlung mit einer Wellenlänge von 0.78 µm - 50 µm, vorzugsweise 1.4 µm - 10 µm, insbesondere bevorzugt 2 µm - 3 µm.

Weiter kann es vorteilhaft sein, wenn zeitlich vor dem Schritt a) eine Reinigung des definierten Bereichs **DB** des Formstücks aus **KFZ** erfolgt, insbesondere eine Reinigung mit Lösungsmitteln.

Weiter kann es vorteilhaft sein, wenn der Bereich **DB** des Formstücks aus **KFZ** nach dem Schritt a) abkühlt. Vorzugsweise beträgt zwischen den Schritten a) und b) die Oberflächentemperatur des definierten Bereichs **DB** des Formstücks aus **KFZ ≤** 30 C°, insbesondere 20-30 C°. Weiter bevorzugt entspricht zwischen den Schritten a) und b) die Oberflächentemperatur des definierten Bereichs **DB** des Formstücks aus **KFZ** der Umgebungstemperatur.

Weiter kann es vorteilhaft sein, wenn zwischen den Schritten a) und b) eine Zeitspanne von 2-200 min, insbesondere 5-180 min, insbesondere bevorzugt 5-120 min, liegt.

Überraschenderweise wurde gefunden, dass die Haftung der Polyurethanzusammensetzungen **P** dadurch weiter verbessert wurde.

Als Substrate eignen sich insbesondere Substrate, welche ausgewählt sind aus der Gruppe bestehend aus Beton, Mörtel, Backstein, Ziegel, Gips, ein Naturstein wie Granit oder Marmor, Glas, Glaskeramik, Metall oder Metalllegierung, Holz, Kunststoff oder Lack.

Ein besonders bevorzugtes zu verklebendes Substrat stellt ein Formteil auf Basis Glasfasern und/oder Kohlefasern in einer Polyester- oder Epoxidmatrix dar.

Es ist insbesondere vorteilhaft, wenn es sich bei dem es sich bei dem Substrat in Schritt c) um ein Formstücks aus **KFZ**, insbesondere um ein Material, dessen **Kunststoffmatrix** Epoxidharz enthält und dessen **Faserwerkstoff** Kohlenstofffasern aufweist.

Das erfindungsgemässe Verfahren umfasst einen Schritt d) Aushärten der Polyurethanzusammensetzungen **P**.

Die Aushärtung der der Polyurethanzusammensetzungen **P** wird primär durch die Art und Weise bestimmt, mit der die Zusammensetzung in Kontakt mit Feuchtigkeit bzw. Wasser kommt.

Die für die Aushärtung benötigte Feuchtigkeit kann entweder aus der Luft stammen (Luftfeuchtigkeit) oder sie kann beispielsweise als wässrige Paste der Zusammensetzung beigemischt werden.

Bevorzugt wird die Polyurethanzusammensetzungen **P**, mindestens teilweise, durch das Zuführen von Wärme ausgehärtet, wobei die Temperatur der Zusammensetzung während der Wärmeeinwirkung mindestens 50 °C beträgt und vorteilhaft zwischen 60 °C und 160 °C, bevorzugt zwischen 80 °C und 140 °C, besonders bevorzugt zwischen 90 °C und 130 °C, liegt.

Die für eine Wärmeaushärtung der Zusammensetzung notwendige Wärme kann mit jeder beliebigen Energiequelle erzeugt werden. Geeignete Mittel zur Erwärmung sind insbesondere Umluftöfen, Heissluftgebläse oder Infrarotstrahler. Falls mindestens eines der Bauteile ferromagnetisch ist und/oder die Zusammensetzung ein piezoelektrisches, ferromagnetisches oder superparamagnetisches Material enthält, kann die Erwärmung auch durch Anlegen von magnetischen und/oder elektrischen Wechselfeldern, insbesondere Mikrowellen oder Induktion, erfolgen; dies erlaubt ein besonders rasches Erwärmen der beschriebenen Zusammensetzungen.

### Beispiele

### Herstellung Klebstoffzusammensetzung

Zur Herstellung der Komponenten **K1** wurde die Polyolmischung in einem Vakuumdissolver vorgelegt und nach Zugabe von Katalysator und Trocknungsmittel unter Ausschluss von Feuchtigkeit während 20 Minuten bei 25°C gerührt. Anschliessend wurden diese Polypolkomponenten **K1** in eine Kammer einer side-by-side Doppelkartusche (vol./vol=1:1) aus Polypropylen abgefüllt und luft- und feuchtigkeitsdicht mit Kunststoffkolben verschlossen.

Bei Komponente **K2** wurde getrocknete Kreide dem Polyisocyanat zugegeben und unter Rühren und unter Vakuum homogen bei 25°C in einem Vakuumdissolver während 20 Minuten eingearbeitet. Anschliessend wurde diese Polyisocyanatkomponente **K2** in die zweite Kammer der oben genannten side-by-side Doppelkartusche abgefüllt und ebenfalls luft- und feuchtigkeitsdicht mit Kunststoffkolben verschlossen.

Komponenten **K1** und **K2** wurden in der in Tabelle 1 angegebenen Menge mittels Statikmischer volumetrisch 1:1 vermischt.

**Tabelle 1. Klebstoffzusammensetzung**

| **Beispiel** | ***Klebstoff*** |
|---|---|
| Komponente **K1** | (Gew.-%) |
| Polyethertriol OH-Equivalenzgewicht 146 g Hydroxylzahl 385 mg KOH/g | 40.0 |
| Polypropylenethertriol OH-Equivalenzgewicht 1600 g Hydroxylzahl 35 mg KOH/g | 45.0 |
| Propoxyliertes Bisphenol-A *(TAG=3)* | 10 |
| DABCO | 0.2 |
| Zeolith (Trocknungsmittel) | 4.8 |
| | |

| Komponente **K2** | (Gew.-%) |
|---|---|
| Desmodur® VH 20 | 48.0 |
| Kreide | 52.0 |

### Prüfmethoden:

### Zugscherfestigkeit (ZSF) (basierend auf DIN EN 1465)

Die Probekörper der Beispiele 1-10 wurden aus der vorgehend beschriebenen Klebstoffzusammensetzung und zwei Platten aus Kunststoffmatrix-enthaltender Faserstoff-Zusammensetzung, dessen Kunststoffmatrix Epoxidharz enthält und dessen Faserwerkstoff Kohlenstofffasern aufweist (**EK**), jeweils mit dem Mass 100 x 45 x 1.5 mm hergestellt, dabei betrug die Klebfläche 15 x 45 mm bei einer Schichtdicke von 1.6 mm. Die zu verklebende Oberfläche der **EK** wurde zuerst einmal mit einem in Tabelle 2 aufgeführten Lösungsmittel getränkten Lappen abgewischt (Reinigung). Bei den erfindungsgemässen Beispielen 6-10 wurde anschliessend die, der zu verklebenden Oberfläche abgewandte Oberfläche, für 60 sec auf eine Temperatur von 140°C mittels eines IR-Strahlers erwärmt (Firma Vulkan, Schweiz, Wellenlänge der IR-Strahlung 2.5 µm, 1650 Watt). Bei den Vergleichsbeispielen 1-5 wurde auf eine Erwärmung mittels IR-Strahlung vor der Applikation des Klebstoffs verzichtet.

Bei Vergleichsbeispiel 4 wurde die zu verklebende Oberfläche mittels Plasma vorbehandelt.

Bei Vergleichsbeispiel 5 wurde die zu verklebende Oberfläche mittels Scotch-Brite Vlies von 3M vorbehandelt.

Nach einer in Tabelle 2 angegebene Zeit wurde der Klebstoff auf eine der zu verklebenden Oberflächen appliziert und die **EK** gefügt. Anschliessend wurde der Klebstoff mittels Erwärmung durch den vorgehend genannten IR-Strahlers auf 140°C für 60 Sekunden gehärtet. Vor dem Applizieren des Klebstoffs auf die zu verklebende Oberfläche entsprach die Oberflächentemperatur der zu verklebenden Oberfläche der Raumtemperatur.

Die Zuggeschwindigkeit betrug 20mm/min. Bestimmt wurde die Zugscherfestigkeit 2 Minuten, respektive 7 Tage (Lagerung bei 23°C für 7 Tage) nach Härtung des Klebstoffs.

Die Ergebnisse dieser Prüfungen der Zugscherfestigkeit sind in Tabelle 2 zusammengestellt. Die angegebenen Messwerte in MPa sind Mittelwerte aus 3 unabhängigen Versuchen. Weiter wurde von Auge nach dem Zugscherversuch anhand von auf dem **EK** zurückbleibendem Klebstoff das Bruchbild in adhäsives Bruchbild, respektive kohäsives Bruchbild, unterteilt.

**Tabelle 2. Zugscherfestigkeitsprüfung und Probenherstellung; BB: Bruchbild, ad:adhesives Bruchbild, ko:kohäsives Bruchbild**

| Nr. | Reinigung mit Lösungsmittel | IR-Vorbehand. Zeit (60 sec bei 140 °C) | andere Vorbehand. | Zeit [min] zwischen IR-Vorbehand. und Applikation Klebstoff | ZSF [MPa] nach 2 min, BB | ZSF [MPa] nach 7 d, BB |
|---|---|---|---|---|---|---|
| 1 | Isopropanol | nein | - | - | 0.6, ad | 10.0, ko |
| 2 | n-Heptan | nein | - | - | 0.2, ad | 5.9, ad |
| 3 | Aceton | nein | - | - | 0.3, ad | n.a. |
| 4 | Isopropanol | nein | Plasma | - | 0.1, ad | 3.6, ad |
| 5 | Isopropanol | nein | Scotch-Brite Vlies, 3M | - | 0.5, ad | 6.8, ad |
| 6 | Isopropanol | ja | - | 5 | 1.6, ko | 10.9, ko. |
| 7 | Isopropanol | ja | - | 30 | 1.6, ko | n.a. |
| 8 | Isopropanol | ja | - | 60 | 1.5, ko | n.a. |
| 9 | Isopropanol | ja | - | 120 | 1.4, ko | n.a. |
| 10 | Isopropanol | ja | - | 180 | 0.8, ad | n.a. |
| | | | | | | |
| | | | | | | |

Aus Tabelle 2 ist ersichtlich, dass die Beispiele 6-10, welche mit IR-Strahlung vorbehandelt wurden, eine gegenüber den Vergleichsbeispielen 1-5 verbesserte Zugscherfestigkeit, sowohl kurz nach der Härtung (Frühfestigkeit) als auch 7 Tage danach, aufweisen. Weiter weisen die Beispiele 6-9 ein kohäsives Bruchbild auf.

Ferner ist ersichtlich, dass die Beispiele 6 und 7, welche eine Zeitspanne von 5 min, respektive 30 min, zwischen IR-Vorbehandlung und Applikation des Klebstoffes aufweisen, eine bessere Frühfestigkeit aufweisen gegenüber den Beispiele 8 bis 10, deren Zeitspanne 60 min, 120 min, respektive 180 min beträgt.

### Zugscherfestigkeit (ZSF) (basierend auf DIN EN 1465)

Die Probekörper der Beispiele 11-18 wurden aus der vorgehend beschriebenen Klebstoffzusammensetzung und zwei Platten aus Kunststoffmatrix-enthaltender Faserstoff-Zusammensetzung, dessen Kunststoffmatrix Epoxidharz enthält und dessen Faserwerkstoff Kohlenstofffasern aufweist (**EK**), jeweils mit dem Mass 100 x 45 x 1.5 mm hergestellt, dabei betrug die Klebfläche 15 x 45 mm bei einer Schichtdicke von 1.6 mm. Die **EK** stammen von verschiedenen Herstellern (Hersteller 1 - 4)

Die zu verklebende Oberfläche der **EK** wurde zuerst einmal mit einem Isopropanol getränkten Lappen abgewischt (Reinigung). Bei den erfindungsgemässen Beispielen 15-18 wurde anschliessend die, der zu verklebenden Oberfläche abgewandte Oberfläche, für 60 sec auf eine Temperatur von 140°C mittels eines IR-Strahlers erwärmt (Firma Vulkan, Schweiz, Wellenlänge der IR-Strahlung 2.5 µm, 1650 Watt). Bei den Vergleichsbeispielen 11-14 wurde auf eine Erwärmung mittels IR-Strahlung verzichtet.

Nach 10 min wurde der Klebstoff auf eine der zu verklebenden Oberflächen appliziert und die **EK** gefügt. Vor dem Applizieren des Klebstoffs auf die zu verklebende Oberfläche entsprach die Oberflächentemperatur der zu verklebende Oberfläche der Raumtemperatur. Gehärtet wurde der Klebstoff durch Erwärmung mittels des vorgehend genannten IR-Strahlers auf 140°C für 60 Sekunden. Die Zuggeschwindigkeit betrug 20mm/min. Bestimmt wurde die Zugscherfestigkeit 1 Minute nach Ende der Härtung des Klebstoffs.

Die Ergebnisse dieser Prüfungen der Zugscherfestigkeit in MPa sind in Tabelle 3 zusammengestellt.

**Tabelle 3. Zugscherfestigkeitsprüfung und Probenherstellung**

| Nr. | Reinigung mit Lösungsmittel | IR-Vorbehandlung Zeit (60 sec, 140 °C) | **EK** Hersteller | Zeit [min] zwischen IR-Vorbehandlung und Applikation Klebstoff | ZSF [MPa] nach 1 min |
|---|---|---|---|---|---|
| 11 | Isopropanol | nein | Hersteller 1 | - | 0.2 |
| 12 | Isopropanol | nein | Hersteller 2 | - | 0.8 |
| 13 | Isopropanol | nein | Hersteller 3 | - | 0.5 |
| 14 | Isopropanol | nein | Hersteller 4 | - | 0.8 |
| 15 | Isopropanol | ja | Hersteller 1 | 10 | 0.9 |
| 16 | Isopropanol | ja | Hersteller 2 | 10 | 1.6 |
| 17 | Isopropanol | ja | Hersteller 3 | 10 | 0.8 |
| 18 | Isopropanol | ja | Hersteller 4 | 10 | 1.4 |

## Patentansprüche

1. Verfahren zum Verkleben von Formstücken aus Kunststoffmatrix-enthaltenden Faserstoff-Zusammensetzungen **KFZ** mit Polyurethanzusammensetzungen **P**, aufweisend die Schritte:
a) Applizieren von IR-Strahlung auf einen definierten Bereich **DB** des Formstücks aus **KFZ**;
b) Applizieren einer Polyurethanzusammensetzung **P** auf den definierten Bereich **DB** des Formstücks aus **KFZ**;
c) Fügen der Polyurethanzusammensetzung **P** auf den definierten Bereich **DB** des Formstücks aus **KFZ** mit einem Substrat.
d) Aushärten der Polyurethanzusammensetzung **P**.

2. Verfahren gemäss Anspruch 1, **dadurch gekennzeichnet, dass** es sich bei der Kunststoffmatrix-enthaltenden Faserstoff-Zusammensetzungen **KFZ** um eine Kunststoffmatrix umfassend mindestens ein Epoxidharz handelt.

3. Verfahren gemäss Anspruch 1 oder 2, **dadurch gekennzeichnet, dass** es sich bei dem Faserstoff der Kunststoffmatrix-enthaltenden Faserstoff-Zusammensetzungen **KFZ** um organische Fasern, vorzugsweise Kohlenstofffasern, handelt.

4. Verfahren gemäss einem der vorgehenden Ansprüche, **dadurch gekennzeichnet, dass** im Schritt a) das Applizieren von IR-Strahlung auf der abgewandten Oberfläche des definierten Bereichs **DB** ausgeführt wird, auf der in Schritt b) die Polyurethanzusammensetzung **P** appliziert wird.

5. Verfahren gemäss einem der vorgehenden Ansprüche, **dadurch gekennzeichnet, dass** die Oberflächentemperatur des definierten Bereichs **DB** des Formstücks aus **KFZ** in Schritt a) für 5-600 sec, insbesondere für 30-180 sec, auf eine Temperatur von 60 - 200 C°, insbesondere 120-160 C°, gebracht wird.

6. Verfahren gemäss einem der vorgehenden Ansprüche, **dadurch gekennzeichnet, dass** zeitlich vor dem Schritt a) eine Reinigung des definierten Bereichs **DB** des Formstücks aus **KFZ** erfolgt, insbesondere mit Lösungsmitteln.

7. Verfahren gemäss einem der vorgehenden Ansprüche, **dadurch gekennzeichnet, dass** zwischen den Schritten a) und b) die Oberflächentemperatur des definierten Bereich **DB** des Formstücks aus **KFZ** ≤ 30 C° beträgt.

8. Verfahren gemäss einem der vorgehenden Ansprüche, **dadurch gekennzeichnet, dass** zwischen den Schritten a) und b) eine Zeitspanne von 2-200 min, insbesondere 5-180 min, insbesondere bevorzugt 5-120 min, liegt.

9. Verfahren gemäss einem der vorgehenden Ansprüche, **dadurch gekennzeichnet, dass** es sich bei dem Substrat in Schritt c) um ein Formstücks aus **KFZ** handelt.

10. Verfahren gemäss einem der vorgehenden Ansprüche, **dadurch gekennzeichnet, dass** es sich bei der Kunststoffmatrix-enthaltenden Faserstoff-Zusammensetzungen **KFZ** um ein Material handelt, dessen Kunststoffmatrix Epoxidharz enthält und dessen Faserwerkstoff Kohlenstofffasern aufweist.
